# EUROPÄISCHE PATENTANMELDUNG

(11) **EP 0 774 817 A2**
(43) Veröffentlichungstag der Anmeldung: **21.05.1997**
(21) Anmeldenummer: 96810748.2
(22) Anmeldetag: 07.11.1996
(51) Int. Cl.: H02G 5/06

(54) **Gasisolierte Anlage**

(30) Priorität: 15.11.1995 DE 19542592
(71) Anmelder: ASEA BROWN BOVERI AG, 5400 Baden (CH)
(72) Erfinder: Kostovic, Jadran, 5432 Neuenhof (CH); Moritz, Bertil, 72348 Västeras (SE); Petterson, Kjell, 8152 Glattbrugg (CH)
(74) Vertreter: Kaiser, Helmut, Dr.

(57) **Zusammenfassung**

Die gasisolierte Anlage (1) weist einen hochspannungsführenden Stromleiter (3) auf, welcher durch eine Öffnung einer isoliergasgefüllten Metallkapselung (4) in ein isoliergasgefülltes Rohr (5) einer gasisolierten Leitung geführt ist. Die gasisolierte Leitung ist mit Hilfe eines am Rohr (5) vorgesehenen Montageflansches (7) in gasdichter Weise an der Metallkapselung (4) angebracht. Das Rohr (5) ist aus Isolierstoff gefertigt und weist einen trompetenartig aufgeweiteten und in den Montageflansch (7) auslaufenden Endabschnitt (8) auf.

Durch das Aufweiten des Isolierrohrs (5) ist der Übergang von der gasisolierten Leitung auf die Metallkapselung (4) dielektrisch entlastet. Dies ist von besonderem Vorteil für die dielektrisch besonders beanspruchte Übergangsstelle vom Isolierrohr (5) auf die Metallkapselung (4), die so besonders wirkungsvoll vor Lichtbogenüberschlägen geschützt ist.

## Beschreibung

### TECHNISCHES GEBIET

Bei der Erfindung wird ausgegangen von einer gasisolierten Anlage mit einem hochspannungsführenden Stromleiter, welcher durch eine Öffnung einer isoliergasgefüllten Metallkapselung in ein isoliergasgefülltes Rohr einer gasisolierten Leitung geführt ist, die mit Hilfe eines am Rohr vorgesehenen Montageflansches in gasdichter Weise an der Metallkapselung angebracht ist.

### STAND DER TECHNIK

Gasisolierte Anlagen der eingangs genannten Art sind zum Beispiel in einem Aufsatz von H.P.Szente-Varga: "Bau und Inbetriebnahme von SF₆-Schaltanlagen für 420 kV und 525 kV Nennspannung", Brown Boveri Mitt. 11-79, S.700-709, beschrieben. Die beschriebenen Anlagen weisen jeweils als SF₆-Rohrgasschiene ausgeführte lange Verbindungen zu Freiluftanschlüssen auf. Diese SF₆-Rohrgasschienen enthalten wie die übrigen Komponenten der Anlagen Kapselungsgehäuse aus Aluminium und sind daher relativ kostenintensiv.

In US-A-4,415,763 ist eine gasisolierte Leitung beschrieben, bei der ein hochspannungsführender Stromleiter in einem mit komprimiertem SF₆ gefüllten Rohr aus Isoliermaterial, wie typischerweise Polyäthylen, angeordnet ist. Das Isolierrohr trägt auf seiner Mantelfläche eine feldsteuernde Schhicht aus leitendem oder halbleitendem Material. Beim Anschluss einer derartigen gasisolierten Leitung an eine gasisolierte Metallkapselung sind dielektrische Probleme beim Übergang vom Isolierrohr auf die Metallkapselung nicht auszuschliessen.

### KURZE DARSTELLUNG DER ERFINDUNG

Der Erfindung, wie sie in Patentanspruch 1 angegeben ist, liegt die Aufgabe zugrunde, eine gasisolierte Anlage der eingangs genannten Art anzugeben, welche preiswert hergestellt werden kann und welche zugleich günstige elektrische Eigenschaften aufweist.

Die Anlage nach der Erfindung zeichnet sich dadurch aus, dass der Übergang von der gasisolierten Leitung auf die Metallkapselung dielektrisch weitgehend entlastet ist. Diese dielektrische Entlastung kann durch trompetenartiges Aufweiten des Endes eines beim Bau der Anlage verwendeten Isolierrohrs erreicht werden. Daher ist es möglich, die Anlage äusserst kostengünstig zu erstellen. Durch das Aufweiten des Isolierrohrs wird die Übergangsstelle vom Isolierrohr auf die Metallkapselung dielektrisch wirkungsvoll abgeschirmt und dem Einfluss des in der gasisolierten Leitung herrschenden starken elektrischen Feldes entzogen. Im Isolierrohr gegebenenfalls auftretende Teilentladungen werden so von der Metallkapselung ferngehalten, wodurch das Kurzschlussrisiko ganz wesentlich vermindert ist.

Von besonderem Vorteil ist es, wenn zusätzlich am trompetenartig aufgeweiteten Ende des Isolierrohrs ein den Stromleiter umgebender Isolierring angebracht ist, da dann möglicherweise in der gasisolierten Leitung entstehende Teilentladungen vor ihrem Aufgleiten auf metallene Elektroden mit grosser Sicherheit abgefangen werden können, und so die Ausbildung von die Funktionsfähigkeit der Anlage möglicherweise gefährdenden elektrischen Überschlägen vermieden wird.

### KURZE BESCHREIBUNG DER ZEICHNUNGEN

Bevorzugte Ausführungsbeispiele der Erfindung und die damit erzielbaren weiteren Vorteile werden nachfolgend anhand von Zeichnungen näher erläutert. Hierbei zeigt:
- Fig.1: eine Aufsicht auf einen axial geführten Schnitt durch den unter der Achse gelegenen Teil einer ersten Ausführungsform der gasisolierten Anlage nach der Erfindung im Bereich des Übergangs von einer zylindersymmetrisch ausgebildeten gasisolierten Leitung auf einen rohrförmig ausgebildeten Abschnitt einer gasisolierten Metallkapselung, bei der die Äquipotentialflächen des bei Betrieb der gasisolierten Anlage herrschenden elektrischen Feldes dargestellt sind,
- Fig.2: ein Diagramm, in dem die an der im Gasraum liegenden Innenfläche des Isolierrohrs gemäss Fig.1 herrschende elektrische Feldstärke E in Funktion des in axialer Richtung festgelegten Abstands s [m] von einem im Isolierrohr befindlichen Punkt dargestellt ist,
- Fig.3: eine Aufsicht auf einen axial geführten Schnitt durch eine gegenüber der ersten Ausführungsform im Inneren des Isolierrohrs abgeänderte zweite Ausführungsform der gasisolierten Anlage nach der Erfindung, und
- Fig.4: ein Diagramm, in dem die an der im Gasraum liegenden Innenfläche des Isolierrohrs gemäss Fig.3 herrschende elektrische Feldstärke E in Funktion des in axialer Richtung festgelegten Abstands s [m] von einem im Isolierrohr befindlichen Punkt dargestellt ist.

### WEGE ZUR AUSFÜHRUNG DER ERFINDUNG

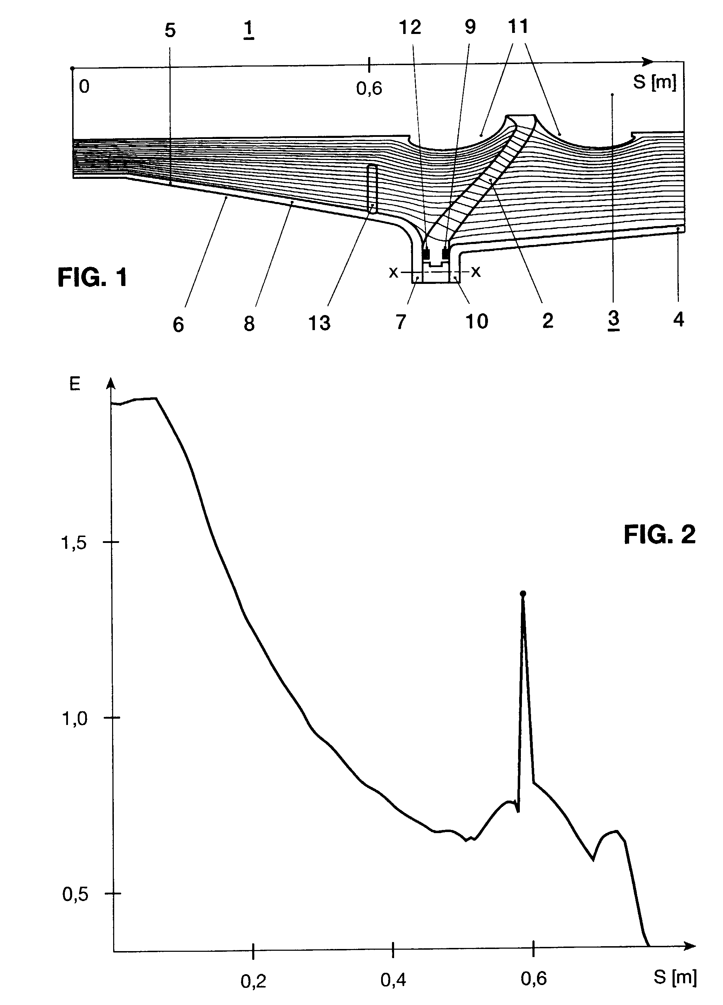

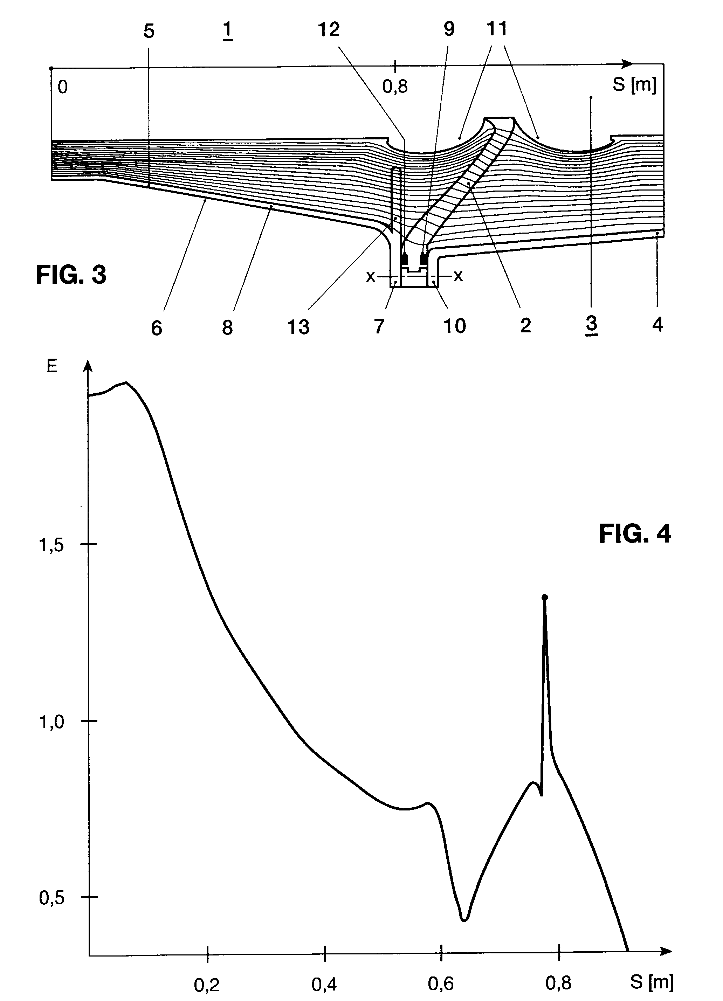

In allen Figuren beziehen sich gleiche Bezugszeichen auf gleichwirkende Teile. Eine in den Ausführungsformen nach den Figuren 1 und 3 dargestellte und mit dem Bezugszeichen 1 gekennzeichnete gasisolierte Anlage weist einen auf einem Schottungsisolator 2 gelagerten Stromleiter 3 auf. Der Stromleiter 3 ist jeweils zentral in einem rohrförmigen Abschnitt einer etwa aus Aluminium oder Stahl bestehenden Metallkapselung 4 und einem Isolierrohr 5 einer gasisolierten Leitung geführt. Das Isolierrohr 5 ist aus einem gegebenenfalls füllstoffverstärkten Kunststoff, wie etwa einem Thermplast auf der Basis von Polyäthylen oder einem Duromer auf der Basis von Epoxid oder Polyester, gebildet und weist auf seiner Mantelfläche eine mit der Metallkapselung 4 verbundene, elektrisch leitend oder halbleitend ausgebildete Beschichtung 6 auf. Diese Beschichtung 6 stellt ein definiertes Nullpotential auf der Mantelfläche des Isolierrohrs 5 sicher und homogenisiert das elektrische Feld im Gasraum zwischen dem Stromleiter 3 und dem Isolierrohr 5. Das Isolierrohr 5 enthält einen trompetenartig aufgeweiteten und in einen Montageflansch 7 auslaufenden Endabschnitt 8.

In der Metallkapselung 4 ist eine vom Schottungsisolator 2 mittels eines Dichtungsringes 9 gasdicht verschlossene und von einem Kapselungsflansch 10 umrandete Öffnung vorgesehen, durch die der Stromleiter 3 aus der Metallkapselung 4 in das Isolierrohr 5 der gasisolierten Leitung geführt ist. Der Schottungsisolator 2 ist im wesentlichen trichterförmig ausgebildet und ist aus dielektrischen Gründen mit seiner den Stromleiter 3 tragenden Spitze ins Innere der Metallkapselung 4 geführt. Auf dem Potential des Stromleiters 3 befindliche, feldsteuernde Elektroden 11 entlasten den Schottungsisolator 2 im Bereich des Stromleiters dielektrisch. Der Schottungsisolator 2 ist mit seinem Aussenrand zwischen den Montageflansch 7 und den Kapselungsflansch 10 geführt und ist zwischen diesen beiden Flanschen mittels einer nur symbolisch dargestellten Verschraubung eingespannt. Die Gasdichtigkeit der gasisolierten Leitung wird hierbei mittels eines zwischen dem Aussenrand des Schottungsisolators 2 und dem Montageflansch 7 angeordneten Dichtungsringes 12 erreicht.

Bei einer solchen gasisolierten Anlage 1 zeichnet sich die gasisolierte Leitung etwa bei Verwendung eines Isolierrohrs 5 aus Polyäthylen durch eine grosse Spannungsfestigkeit und einen kleinen Aussendurchmesser aus. Durch den trompetenartig erweiterten Endabschnitt 8 wird erreicht, dass entsprechend den Diagrammen gemäss den Figuren 2 und 4 das vor dem Endabschnitt 8 im Gasraum der gasisolierten Leitung herrschende starke elektrische Feld kontinuierlich verringert und am Ende der gasisolierten Leitung praktisch auf einen Bruchteil reduziert wird. Die Übergangsstelle vom Isolierrohr 5 auf die Metallkapselung 4 ist dann in einem nahezu feldfreien Raum angeordnet und ist so dem unerwünschten Einfluss von Teilentladungen oder Lichtbogenüberschlägen auf die Metallkapselung 4 weitgehend entzogen.

Der trompetenartig aufgeweitete Endabschnitt 8 trägt auf seiner dem Stromleiter 3 zugewandten Innenseite einen Isolierring 13, welcher in Hinblick auf eine besonders grosse Betriebssicherheit der gasisolierten Anlage in etwa bis auf Isolationsabstand an den Stromleiter 3 geführt ist. Dieser Ring ist bei der Ausführungsform nach Fig. 1 auf einem konusförmig erweiterten Teil des Endabschnitts 8 angebracht. Mit Vorteil besteht der Isolierring 13 aus dem gleichen Material wie das Rohr 5, da er dann in besonders einfacher Weise, etwa durch Schweissen oder Kleben, angebracht oder bei der Herstellung des Isolierrohrs 5 gegebenenfalls sogar eingeformt werden kann. Der Isolierring 13 fängt im Inneren der gasisolierten Leitung im Bereich des starken elektrischen Feldes gegebenenfalls gebildete Teilentladungen ab und wirkt so wie eine Barriere gegen Lichtbogenüberschläge von der gasisolierten Leitung zur Metallkapselung 4.

Bei der Ausführungsform gemäss Fig.3 ist der Isolierring 3 etwa durch Schweissen oder Kleben am Montageflansch 7 angebracht und ist als senkrecht zur Rohrachse ausgerichtete Scheibe ausgebildet. Bei dieser Ausführungsform der gasisolierten Anlage nach der Erfindung wirkt der Isolierring 13 als Lichtbogenbarriere zur Metallkapselung 4.

Aus den Diagrammen gemäss den Figuren 2 und 4 ist zu erkennen, dass im Bereich des Isolierrings 13 eine Spitze der elektrischen Feldstärke auftritt. Diese Spitze ist für das dielektrische Verhalten der gasisolierten Anlage ungefährlich, wenn sie kleiner ist als die im Inneren der gasisolierten Leitung herrschende elektrische Feldstärke. Dies ist ersichtlich dann mit Sicherheit der Fall, wenn - wie aus den Figuren 1 und 3 entnommen werden kann - der Isolierring 13 in etwa höchstens soweit an den Stromleiter 3 herangeführt wird, wie die Innenwand des Isolierrohrs 5 im links des Endabschnitts 8 gelegenen Teils der gasisolierten Leitung vom Stromleiter 3 beabstandet ist.

Anstelle eines Schottungsisolators 2 kann auch ein anderer stützend wirkender Isolator verwendet werden. Ein solcher Isolator kann etwa ein Stützisolator mit Durchgangsöffnungen für das Isoliergas sein. Das Isoliergas kann dann von der Metallkapselung 4 zum Isolierrohr kommunizieren.

### Bezugszeichenliste

- 1: gasisolierte Anlage
- 2: Stützisolator
- 3: Stromleiter
- 4: Metallkapselung
- 5: Isolierrohr
- 6: Beschichtung
- 7: Montageflansch
- 8: Endabschnitt
- 9: Dichtungsring
- 10: Kapselungsflansch
- 11: Elektroden
- 12: Dichtungsring
- 13: Isolierring

## Patentansprüche

1. Gasisolierte Anlage mit einem hochspannungsführenden Stromleiter (3), welcher durch eine Öffnung einer isoliergasgefüllten Metallkapselung (4) in ein isoliergasgefülltes Rohr (5) einer gasisolierten Leitung geführt ist, die mit Hilfe eines am Rohr (5) vorgesehenen Montageflansches (7) in gasdichter Weise an der Metallkapselung (4) angebracht ist, dadurch gekennzeichnet, dass das Rohr (5) aus Isolierstoff gefertigt ist und einen trompetenartig aufgeweiteten und in den Montageflansch (7) auslaufenden Endabschnitt (8) aufweist.

2. Anlage nach Anspruch 1, dadurch gekennzeichnet, dass zwischen dem Montageflansch (7) und einem die Öffnung der Metallkapselung (4) umgebenden Kapselungsflansch (10) ein Stützisolator (2) angeordnet ist.

3. Anlage nach Anspruch 2, dadurch gekennzeichnet, dass der Stützisolator ein die Öffnung der Metallkapselung (4) gasdicht verschliessender Schottungsisolator (2) ist.

4. Anlage nach Anspruch 3, dadurch gekennzeichnet, dass der Schottungsisolator (2) trichterförmig ausgebildet und mit seiner den Stromleiter (3) tragenden Spitze ins Innere der Metallkapselung (4) geführt ist.

5. Anlage nach einem der Ansprüche 1 bis 4, dadurch gekennzeichnet, dass der trompetenartig aufgeweitete Endabschnitt (8) auf seiner dem Stromleiter (3) zugewandten Innenseite einen Isolierring (13) trägt.

6. Anlage nach Anspruch 5, dadurch gekennzeichnet, dass der Isolierring (13) in etwa bis auf Isolationsabstand an den Stromleiter (3) geführt ist.

7. Anlage nach Anspruch 6, dadurch gekennzeichnet, dass der Isolierring (13) auf einem konusförmig erweiterten Teil des Endabschnitts (8) angebracht ist.

8. Anlage nach Anspruch 6, dadurch gekennzeichnet, dass der Isolierring (13) am Montageflansch (7) angebracht ist.

9. Anlage nach Anspruch 8, dadurch gekennzeichnet, dass der Isolierring (13) als senkrecht zur Rohrachse ausgerichtete Scheibe ausgebildet ist.

10. Anlage nach einem der Ansprüche 5 bis 9, dadurch gekennzeichnet, dass der Isolierring (13) aus dem gleichen Material wie das Rohr besteht.

11. Anlage nach Anspruch 10, dadurch gekennzeichnet, dass der Isolierring (13) bei der Herstellung des trompetenartig aufgeweiteten Endabschnitts (8) in das Isolierrohr (5) eingeformt ist.
